# EUROPEAN PATENT SPECIFICATION

(11) **EP 2 146 058 B1**
(45) Date of publication and mention of the grant of the patent: **28.09.2011**
(21) Application number: 09250975.1
(22) Date of filing: 31.03.2009
(51) Int. Cl.: F01D 25/30, F01D 15/04, F02C 6/20, F02C 7/12, F02C 7/32, F01N 3/34, B63H 20/24

(54) **Eductor system for a gas turbine engine**
Ejektorsystem für einen Gasturbinenmotor
Système éjecteur pour moteur à turbine à gaz

(30) Priority: 14.07.2008 US 172962
(43) Date of publication of application: 20.01.2010
(73) Proprietor: United Technologies Corporation, Hartford, CT 06101 (US)
(72) Inventor: Donnely, Brian G., Edenton, North Carolina 27932 (US)
(74) Representative: Leckey, David Herbert

(56) References cited:
- EP-A- 0 968 918
- EP-A- 1 381 143
- GB-A- 1 022 324
- US-A- 3 220 805
- US-A- 4 128 769
- US-A1- 2007 063 098

## Description

### BACKGROUND OF THE INVENTION

The present invention relates to a gas turbine engine, and more particularly to an eductor system therefor.

Gas turbine engine power plants are often mounted within an enclosure to reduce acoustic propagation therefrom. A primary airflow communicates with the gas turbine engine and a secondary airflow communicates with the enclosure to provide a cooling airflow for the gas turbine engine. The gas turbine engine generates exhaust products that are expelled through a stack for release to the environment. The secondary air from the enclosure is also exhausted to avoid overheating of engine external equipment and to minimize vapor build-up. An exhaust powered eductor system is to draw the secondary air out of the enclosure and up the stack. If the back pressure of the stack is high, however, the eductor system may not have sufficient capacity at all operating conditions to exhaust the enclosure air. This may be particularly problematic in ships powered by a multiple of gas turbine engines which exhaust though a common stack.

A power plant having the featues of the preamble of claim 1 is disclosed in US 2007/0063098 A1. Other power plants having a gas turbine engine associated with an eductor are disclosed in EP-A-968918 and US-A-4128769.

### SUMMARY OF THE INVENTION

A power plant according to the present invention is set forth in claim 1.

A method of communicating an exhaust from a gas turbine engine according to the present invention is set forth in claim 9.

### BRIEF DESCRIPTION OF THE DRAWINGS

The various features and advantages of this invention will become apparent to those skilled in the art from the following detailed description of the disclosed non-limiting embodiment. The drawings that accompany the detailed description can be briefly described as follows:
Figure 1 is a block diagram of a gas turbine engine power plant for use with one embodiment of the of the present invention; and
Figure 2 is a block diagram of a primary and secondary airflow from a power plant according to one embodiment of the present invention.

### DETAILED DESCRIPTION OF THE DISCLOSED EMBODIMENT

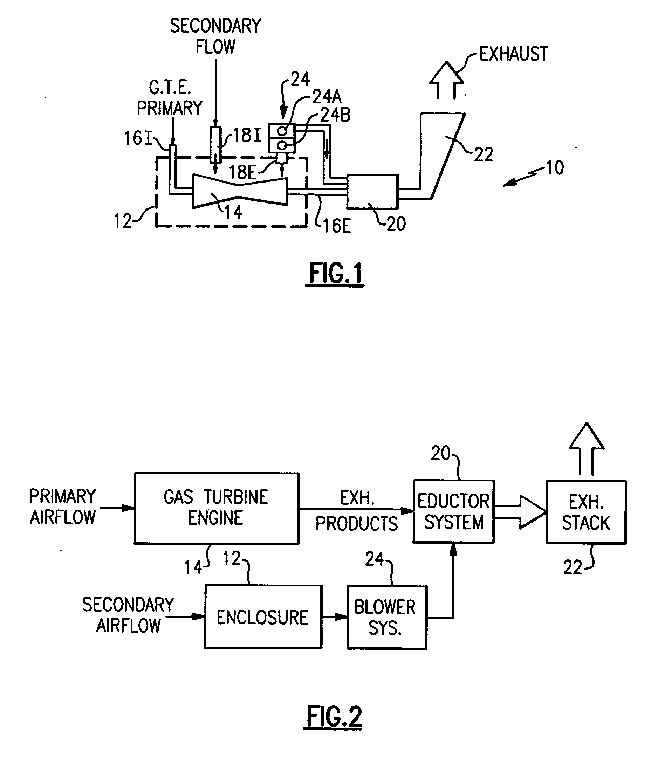

Figure 1 schematically illustrates a power plant 10. The power plant 10 may be utilized in a marine vehicle, a land vehicle, a stationary power generation plant or other system with an enclosed powerplant.

The power plant 10 includes a gas turbine engine 14 within an enclosure 12. A primary air inlet 16I communicates with the gas turbine engine 14 to provide a primary airflow path into the gas turbine engine 14. A secondary air inlet 18I communicates with the enclosure 12 to provide a cooling airflow path for the gas turbine engine 14.

The gas turbine engine 14 communicates an exhaust flow through a primary exhaust duct 16E, an eductor system 20, and an exhaust stack 22. A blower system 24 communicates with the eductor 20 to communicate the secondary airflow from the enclosure 12 and utilize the kinetic energy of the secondary airflow to facilitate the flow of the gas turbine engine exhaust. That is, the blower system 24 essentially supercharges the gas turbine engine exhaust product.

The blower system 18 may include a multiple of blowers 24A, 24B for redundancy or arrangement requirements to facilitate operation over a wide range of engine power and stack back pressure. The blower system 24 also allows the enclosure 12 to avoid significant pressurization as contrasted with conventional enclosures which utilize fan systems for cooling. That is, the secondary airflow is pressurized, not the enclosure 12. The reduction or elimination of pressurization allows for the reduction in enclosure structural support and a thereby lighter weight enclosure 12.

Referring to Figure 2, secondary flow is communicated from the enclosure 12, pressurized by the blower system 24 and exhausted into the eductor system 20.

Simultaneous therewith, primary flow is communicated to the gas turbine engine which generates exhaust products. The exhaust product flow is communicated from the gas turbine engine 14, through the eductor system 20, and exhausted through the exhaust stack 22.

Although particular step sequences are shown, described, and claimed, it should be understood that steps may be performed in any order, separated or combined unless otherwise indicated and will still benefit from the present invention.

The foregoing description is exemplary rather than defined by the limitations within. Many modifications and variations of the present invention are possible in light of the above teachings. The disclosed embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A power plant (10) comprising:
an enclosure (12);
a gas turbine engine (14) contained at least partially within said enclosure (12); and
an eductor system (20) in communication with said gas turbine engine (14);
and **characterised by** further comprising:
a blower system (24) arranged between said enclosure (12) and said eductor system (20) for communicating an airflow from said enclosure (12) to said eductor system (20).

2. The power plant as recited in claim 1, further comprising an exhaust stack (22) in communication with said eductor system (20).

3. The power plant as recited in claim 1 or 2, wherein said blower system (24) comprises a multiple of blowers (24A, 24B).

4. The power plant as recited in any preceding claim, wherein said enclosure (12) is unpressurized.

5. The power plant as recited in any preceding claim, further comprising a primary inlet (161) in communication with said gas turbine engine (14).

6. The power plant as recited in claim 5, further comprising a secondary inlet (18I) in communication with said enclosure (12).

7. The power plant as recited in any preceding claim, wherein said enclosure (12) forms a section of a vehicle.

8. The power plant as recited in claim 7, wherein said vehicle comprises a ship.

9. A method of communicating an exhaust from a gas turbine engine (14) comprising:
communicating a primary airflow into a gas turbine engine (14);
communicating a secondary airflow into an enclosure (12) which at least partially contains the gas turbine engine (14); and
communicating an exhaust flow from the gas turbine engine (14) into an eductor system (20); **characterised by**:
pressurizing the secondary airflow from the enclosure (12) with a blower system (24) arranged between the enclosure (12) and the eductor system (20); and
communicating the pressurized secondary airflow into the eductor system (20).

10. A method as recited in claim 9, further comprising:
maintaining the enclosure (12) in an unpressurized condition.

11. A method as recited in claim 9 or 10, further comprising:
communicating the exhaust flow and the secondary airflow from the eductor system (20) into an exhaust stack (22).

## Patentansprüche

1. Kraftanlage (10) umfassend:
ein Gehäuse (12);
eine Gatturbinenmaschine (14), die zumindest teilweise innerhalb des Gehäuses (12) enthallen ist; und
ein Ausstoßsystem (20) in Verbindung mit der Gasturbinenmaschine (14);
und **dadurch gekennzeichnet, dass** es des Weiteren umfasst:
ein Gebläsesystem (24), das zwischen dem Gehäuse (12) und dem Ausstoßsystem (20) zum Kommunizieren eines Luftstroms von dem Gehäuse (12) zu dem Ausstoßsystcm (20) angeordnet ist.

2. Kraftanlage nach Anspruch 1, des Weiteren umfassend einen Ausstoßschacht (22) in Verbindung mit dem Ausstoßsystem (20).

3. Kraftanlage nach Anspruch 1 oder 2, wobei das Gebläsesystem (24) eine Mehrzahl von Gebläsen (24A, 24B) umfasst.

4. Kraftanlage nach einem der vorangchenden Ansprüche, wobei das Gehäuse (12) nicht druckbeaufschlagt ist.

5. Kraftanlage nach einem der vorangehenden Ansprüche, des Weiteren einen primären Einlass (161) umfassend, der in Verbindung mit der Gasturbinenmaschine (14) steht.

6. Kraftanlage nach Anspruch 5, des Weiteren einen sekundären Einlass (181) umfassend, der in Verbindung mit dem Gehäuse (12) steht.

7. Kraftanlage nach einem der vorangehenden Ansprüche, wobei das Gehäuse (12) einen Bereich eines Fahrzeugs ausbildet.

8. Kraftanlage nach Anspruch 7, wobei das Fahrzeug ein Schiff umfasst.

9. Verfahren zum Kommunizieren eines Ausstoßes einer Gasturbinenmaschine (14) umfassend:
Kommunizieren eines primären Luftstroms in eine Gasturbinenmaschine (14);
Kommunizieren eines sekundären Luftstroms in ein Gehäuse (12), das zumindest teilweise die Gasturbinenmaschine (14) enthält; und
Kommunizieren eines Ausstoßstroms von der Gasturbinenmaschine (14) in ein Ausstoßsystem (20); **gekennzeichnet durch**:
Druckbcaufschlagen des sekundären Luftstroms von dem Gehäuse (12) mit einem Gebläsesysten (24), das zwischen dem Gehäuse (12) und dem Ausstoßsystem (20) angcordnet ist; und
Kommunizieren des druckbeaufschlagten, sekundären Luftstroms in das Ausstoßsystem (20).

10. Verfahren nach Anspruch 9, des Weiteren umfassend:
Behalten des Gehäuses (12) in einem nicht druckbeaufschlagten Zustand.

11. Verfahren nach Anspruch 9 oder 10, des Weiteren umfassend:
Kommunzieren des Ausstoßstroms und des sekundären Luftstroms von dem Ausstoßsystem (20) in einen Ausstoßschacht (22).

## Revendications

1. Centrale électrique (10) comprenant :
une enceinte (12) ;
un moteur de turbine à gaz (14) abrité au moins partiellement dans ladite enceinte (12) ; et
un système éjecteur (20) en communication avec ledit moteur de turbine à gaz (14) ; et **caractérisé par le fait qu'**elle comprend en outre :
un système à soufflante (24) agencé entre ladite enceinte (12) et ledit système éjecteur (20) pour assurer l'acheminement d'un flux d'air à partir de ladite enceinte (12) vers ledit système éjecteur (20).

2. Centrale électrique selon la revendication 1, comprenant en outre une cheminée d'évacuation (22) en communication avec ledit système éjecteur (20).

3. Centrale électrique selon la revendication 1 ou 2, ledit système à soufflante (24) comportant une pluralité de soufflantes (24A, 24B).

4. Centrale électrique selon l'une quelconque des revendications précédentes, ladite enceinte (12) étant non pressurisée.

5. Centrale électrique selon l'une quelconque des revendications précédentes, comprenant en outre un orifice d'admission primaire (16I) en communication avec ledit moteur de turbine à gaz (14).

6. Centrale électrique selon la revendication 5, comprenant en outre un orifice d'admission secondaire (18I) en communication avec ladite enceinte (12).

7. Centrale électrique selon l'une quelconque des revendications précédentes, ladite enceinte (12) constituant une section d'un véhicule.

8. Centrale électrique selon la revendication 7, ledit véhicule comprenant un navire.

9. Procédé destiné à acheminer un échappement provenant d'un moteur de turbine à gaz (14), comprenant les opérations consistant à :
acheminer un flux d'air primaire vers un moteur de turbine à gaz (14) ;
acheminer un flux d'air secondaire vers une enceinte (12) qui abrite au moins partiellement le moteur de turbine à gaz (14) ; et
acheminer un flux d'échappement provenant du moteur de turbine à gaz (14) vers un système éjecteur (20) **caractérisé par** :
la pressurisation du flux d'air secondaire provenant de l'enceinte (12) à l'aide d'un système à soufflante (24) agencé entre l'enceinte (12) et le système éjecteur (20) ; et
l'acheminement du flux d'air secondaire pressurisé vers le système éjecteur (20).

10. Procédé selon la revendication 9, comprenant en outre l'opération consistant à :
maintenir l'enceinte (12) dans un état non pressurisé.

11. Procédé selon la revendication 9 ou 10, comprenant en outre l'opération consistant à :
acheminer le flux d'échappement et le flux d'air secondaire à partir du système éjecteur (20) vers une cheminée d'évacuation (22).
